# EUROPÄISCHE PATENTSCHRIFT

(11) **EP 3 286 067 B1**
(45) Veröffentlichungstag und Bekanntmachung des Hinweises auf die Patenterteilung: **24.10.2018**
(21) Anmeldenummer: 16715317.0
(22) Anmeldetag: 08.04.2016
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 21.04.2015 DE 102015207230
(43) Veröffentlichungstag der Anmeldung: 28.02.2018
(73) Patentinhaber: ThyssenKrupp Presta AG, 9492 Eschen (LI); thyssenkrupp AG, 45143 Essen (DE)
(72) Erfinder: FORTE, Sebastian, 9493 Mauren (LI); SCHNITZER, Hieronymus, 9487 Gamprin (LI); KREUTZ, Daniel, 6800 Feldkirch (AT); HEITZ, Thomas, 9493 Mauren (LI)
(74) Vertreter: thyssenkrupp Intellectual Property GmbH
(86) Internationale Anmeldenummer: PCT/EP2016/057821
(87) Internationale Veröffentlichungsnummer: WO 2016/169793

(56) Entgegenhaltungen:
- DE-A1-102008 060 225

## Beschreibung

### Stand der Technik

Die Erfindung betrifft eine Lenksäule für ein Kraftfahrzeug, umfassend
eine Stelleinheit, in der eine Lenkspindel um ihre Längsachse drehbar gelagert ist,
eine Halteeinheit, die mit der Karosserie des Kraftfahrzeugs verbindbar ist und die die Stelleinheit lagert, und
eine Spanneinrichtung, die in einer Fixierstellung die Stelleinheit in einem Normalbetrieb relativ zur Halteeinheit festlegt und die in einer Freigabestellung eine Verstellung der Stelleinheit relativ zur Halteeinheit zumindest in eine Längsrichtung freigibt,
wobei zumindest ein Energieabsorptionselement vorgesehen ist, welches sich parallel zur Längsrichtung in eine Öffnung eines Klemmgehäuses hinein erstreckt, wobei das Klemmgehäuse im Normalbetrieb in Längsrichtung an der Halteeinheit abgestützt ist,
und die Spanneinrichtung ein Betätigungselement umfasst, welches mit dem Klemmgehäuse zusammenwirkt, wobei in Freigabestellung das Energieabsorptionselement in der Durchgangsöffnung des Klemmgehäuses in Längsrichtung bewegbar ist und in Fixierstellung das Energieabsorptionselement in der Durchgangsöffnung des Klemmgehäuses festlegbar ist.

Zur Anpassung der Lenkradposition an die Sitzposition des Fahrers eines Kraftfahrzeugs sind derartige Lenksäulen in unterschiedlichen Ausführungsformen im Stand der Technik bekannt. Neben einer Höhenverstellung durch die Einstellung der Neigung der Lenksäule kann das am hinteren Ende der Lenkspindel angebrachte Lenkrad bei gattungsgemäßen Lenksäulen durch eine Längenverstellung in Richtung der Lenksäulen-Längsachse im Fahrzeuginnenraum positioniert werden.

Die Längenverstellbarkeit wird dadurch realisiert, dass die Stelleinheit, welche die in einem Mantelrohr drehbar gelagerte Lenkspindel umfasst, relativ zur Halte- oder Trageinheit, welche eine fest mit der Fahrzeugkarosserie verbundene Halterung der Lenksäule bereitstellt, in Längsrichtung teleskopartig verstellbar ist und mittels einer lösbaren Spanneinrichtung in unterschiedlichen Längspositionen feststellbar, d.h. lösbar fixierbar ist. Die Spanneinrichtung, auch als Feststelleinrichtung bezeichnet, wirkt auf die von der Halteeinheit gehaltene Stelleinheit, wobei in geöffnetem Zustand der Spanneinrichtung - auch als Freigabestellung oder Löseposition bezeichnet - eine Verschiebung der Stelleinheit gegenüber der Halteeinheit in Längsrichtung zur Einstellung der Lenkradposition möglich ist und in geschlossenem Zustand - Fixierstellung oder Feststellposition genannt - die Stelleinheit mit der Halteeinheit verspannt ist und im normalen Fahrbetrieb die Lenkradposition unter den zu erwartenden mechanischen Beanspruchungen fixiert ist.

Als wirksame Maßnahme zur Verbesserung der Insassensicherheit bei einem Fahrzeugzusammenstoß, dem sogenannten Crashfall oder Fahrzeugfrontalaufprall, bei dem der Fahrer mit hoher Geschwindigkeit auf das Lenkrad aufprallt, ist es bekannt, die Lenksäule auch in Fixierstellung der Spanneinrichtung in Längsrichtung zusammenschiebbar zu gestalten, wenn ein hohe Kraft auf das Lenkrad ausgeübt wird, die einen Grenzwert überschreitet, der nur im Crashfall auftritt. Um für eine kontrollierte Abbremsung eines auf das Lenkrad auftreffenden Körpers zu sorgen, ist zwischen der Halteeinheit und der Stelleinheit, die im Normalbetrieb durch die Spanneinrichtung wie beschrieben miteinander verspannt und fixiert sind, im Crashfall jedoch relativ zueinander zusammengeschoben werden, eine Energieabsorptionseinrichtung eingekoppelt. Diese setzt die eingeleitete kinetische Energie in plastische Verformung eines Energieabsorptionselements um, beispielsweise durch Aufreißen einer Reisslasche oder Verbiegen eines langgestreckten Biegeelements, etwa einem Biegedraht oder Biegestreifen, oder durch die Aufweitung eines Langloches mittels eines Bolzens oder durch die Dehnung eines Blechstreifens oder durch Abtrennen eines Spans mittels eines Hobels.

Eine gattungsgemäße Lenksäule ist in der DE 10 2008 060 225 A1 beschrieben. Die darin beschriebene Spanneinrichtung umfasst ein Spanngetriebe mit einem als Spannachse ausgebildeten Betätigungselement. Eine über einen Bedienhebel ausgeübte Drehbewegung der Spannachse wird durch das Spanngetriebe in einen Klemmhub umgesetzt, der in Querrichtung eine Kraft auf die Halteeinheit ausübt, so dass die darin gelagerte Stelleinrichtung fest verspannt wird, vergleichbar mit der Funktion einer Klemmschelle. Dadurch wird eine kraftschlüssige Fixierung der Stelleinheit in Längsrichtung erreicht.

Die Aktivierung der Energieabsorptionseinrichtung (Crasheinrichtung) erfolgt bei der vorgenannten Bauart einer Lenksäule durch die Spanneinrichtung beim Fixieren der Stelleinheit. Das mit der Stelleinheit verbundene Energieabsorptionselement (Crashelement), bei-spielsweise ein Biegestreifen, ist dabei mit einem Befestigungsabschnitt in Längsrichtung durch eine Durchgangsöffnung eines Klemmhebels bzw. Klemmgehäuses hindurchgeführt, welches seinerseits in Längsrichtung an dem Halteelement abgestützt ist. Im Einzelnen wird zur Crashaktivierung bei der Betätigung des Betätigungselements, also bei einer Verdrehung der Spannachse, durch das Betätigungselement in Fixierstellung eine Kraft auf das Klemmgehäuse ausgeübt, so dass das Klemmgehäuse um eine senkrecht zur Längsachse und zur Spannachse stehende Achse verdreht wird. Dadurch wird der Befestigungsabschnitt des Energieabsorptionselements in der Durchgangsöffnung verkantet, so dass bei einer Krafteinwirkung in Längsrichtung die schräg stehenden Kantenbereiche der Innenwand quer zur Längsrichtung gegen die Oberfläche des Energieabsorptionselements angepresst werden und dieses einklemmen. Durch die auftretenden Reibungskräfte wird das Energieabsorptionselement in Längsrichtung in dem Klemmgehäuse fixiert, ähnlich wie der verstellbare Spannarm an der Schiene einer Schraubzwinge. Vorteilhaft an dieser Art der Aktivierung der Crasheinrichtung ist die kompakte Bauweise und die in Längsrichtung stufenlos mögliche Fixierung der Lenksäulenposition.

Die Crashaktivierung bei der Betätigung der Spanneinrichtung bietet einen erheblichen Sicherheitsgewinn für die Fahrzeuginsassen. Nachteilig ist im Stand der Technik jedoch, dass bei jedem Feststellen durch das Verkanten innerhalb der Durchgangsöffnung Beschädigungen an den Kanten des Energieabsorptionselements in Form von Einkerbungen auftreten können, wodurch das Energieabsorptionsverhalten und damit das Crashniveau beeinträchtigt werden kann. Außerdem kann durch Verhaken der beschädigten Kanten die Verstellung der Lenksäule erschwert werden.

Angesichts der vorangehend erläuterten Problematik ist es eine Aufgabe der vorliegenden Erfindung, eine Lenksäule der eingangs genannten Art mit einer verbesserten Crashaktivierung zur Verfügung zu stellen, bei der das Energieabsorptionsverhalten und die Verstellbarkeit auch durch wiederholtes Feststellen nicht negativ beeinflusst wird.

### Darstellung der Erfindung

Zur Lösung der vorgenannten Problematik wird erfindungsgemäß vorgeschlagen, dass die Öffnung einem Klemmabschnitt mit zumindest abschnittsweise in Längsrichtung keilförmig gegeneinander zusammenlaufenden Innenwandbereichen aufweist, und zwischen dem Energieabsorptionselement und der Innenwand der Öffnung mindestens ein Klemmkörper angeordnet ist, der in den Klemmabschnitt verlagerbar ist, wobei die Summe der Abmessungen des Klemmkörpers und des Energieabsorptionselements zwischen den gegenüberliegenden Innenwandbereichen gemessen größer ist als der kleinste Abstand zwischen den zusammenlaufenden Innenwandbereichen..

Erfindungsgemäß besteht eine Besonderheit darin, dass die Öffnung, im Folgenden gleichbedeutend als Spalt oder Durchgangsöffnung bezeichnet, nicht wie im Stand der Technik einen über die Längserstreckung gleichbleibenden Durchgangsquerschnitt aufweist, sondern der Durchgangsquerschnitt sich zumindest in einem Bereich, dem sogenannten Klemmbereich, verengt, bevorzugt von der Lenkradseite aus gesehen, d.h. nach vorn verengt. Dies wird dadurch erreicht, dass zumindest zwei sich quer zur Längsrichtung gegenüberliegende Innenwandbereiche schräg, zueinander stehen, so dass der dazwischen liegende Durchgangsquerschnitt sich, bevorzugt keilförmig, verjüngt. Bevorzugt wird diese keilförmige Gestaltung dadurch erreicht, dass auf einer Seite der Durchgangsöffnung die Innenwand parallel zur Längsachse durchläuft (parallele Innenwand), während der gegenüberliegende Innenwandabschnitt relativ zur Längsachse geneigt ist (geneigte Innenwand). Das hat den Vorteil, dass der Befestigungsabschnitt des Energieabsorptionselements an der parallelen Innenwand anliegend parallel zur Längsachse durch die Durchgangsöffnung geführt werden kann. Zwischen der von der parallelen Innenwand abgewandten Oberfläche des Energieabsorptionselements und der geneigten Innenwand wird ein ebenfalls keilförmig zusammenlaufender Spaltraum gebildet, in dem ein Klemmkörper angeordnet werden kann, wie im Folgenden erläutert wird.

Die Öffnung kann als Sacköffnung, d.h. das diese Öffnung an einem Ende geschlossen ist, ausgebildet sein. Die Öffnung ist jedoch bevorzugt als beidseitig offene Öffnung ausgebildet sein, d.h. dass die Öffnung an keinem ihrer Enden geschlossen ist.

Unter dem Begriff "keilförmig" sind sämtliche Verjüngungen zu verstehen oder mit anderen Worten sämtliche Anordnungen der Innenwandbereiche die eine Spaltdickenreduktion aufweisen.

Die Festlegung des Energieabsorptionselements bzw. dessen Befestigungsabschnitts erfolgt mittels eines Klemmkörpers, der zwischen einer Oberfläche des Energieabsorptionselements und einer Innenwand der Durchgangsöffnung angeordnet ist. Dabei ist die Gesamtabmessung des Energieabsorptionselements zusammen mit dem benachbart dazu, d.h. darauf bzw. daneben, angeordneten Klemmkörper quer zur Längserstreckung der Durchgangsöffnung gemessen kleiner als der Durchgangsquerschnitt der Durchgangsöffnung außerhalb des Klemmabschnitts, das entspricht dem größten Durchgangsquerschnitt, mit dem die Durchgangsöffnung in den sich keilförmig verengenden Klemmabschnitt übergeht bzw. eintritt. Folglich kann das Energieabsorptionselement zwischen dem Klemmkörper und der Innenwand in diesem Bereich in Längsrichtung zur Längenverstellung der Lenksäule frei hinein- oder hindurchbewegt werden. Durch den sich verengenden Klemmbereich der Durchgangsöffnung kann zwar das Energieabsorptionselement allein hindurch geführt werden, in dem Klemmbereich jedoch unterschreitet der kleinste Abstand der gegeneinander zusammenlaufenden Innenwandbereiche (quer zur Längsrichtung gemessen d.h. zwischen den gegenüberliegenden Innenwänden) die Gesamtabmessung des Energieabsorptionselements zuzüglich des in Querrichtung dazu benachbart angeordneten Klemmkörpers. Die Gesamtabmessung, d.h. die Summe der Einzelabmessung wird in der gleichen Richtung gemessen wie der Abstand zwischen den gegenüberliegenden Innenwänden. Wird nun der Klemmkörper nach vorn in den sich keilförmig verjüngenden Klemmbereich bewegt, kommt er mit der Oberfläche des Energieabsorptionselements und der relativ dazu geneigten Innenwandoberfläche in Kontakt und wird in dem keilförmigen Spaltraum zwischen diesen beiden Oberflächen eingeklemmt. Eine weitere Kraftausübung in Längsrichtung, bevorzugt nach vorn, auf den Klemmkörper führt zu einer entsprechend stärkeren Querkraft und damit zu einer Verklemmung zwischen den gegeneinander geneigten Oberflächen quer zur Längserstreckung, wobei das mit dem Klemmkörper quer zur Längsrichtung seriell im Kraftfluss liegende Energieabsorptionselement ebenfalls mit der wirkenden Querkraft gegen die gegenüberliegende Innenwand angedrückt und somit zwischen Klemmkörper und Innenwand der Durchgangsöffnung kraftschlüssig verspannt wird. Insoweit ist die erfindungsgemäße Funktion zur Festlegung des Energieabsorptionselements am Halteelement vergleichbar mit einem Spannfutter, bei dem ein Klemmkörper entlang einer durch eine schiefen Ebene gebildete Klemmschräge verschoben wird, um senkrecht zu dieser Ebene eine Querkraft zur Verspannung auf ein Werkstück auszuüben, oder mit einem Freilauf, der bei einer Bewegung des Energieabsorptionselements nach vorn blockiert.

Vorzugsweise ist die Innenwand flach relativ zur Längsachse geneigt, d.h. der geneigte Klemmabschnitt der Innenwand schließt mit der Längsachse einen spitzen Winkel α ein, der bevorzugt kleiner als 45°, besonders bevorzugt kleiner als 20°, ist, und vorzugsweise längs des Klemmabschnitts, bevorzugt nach vorn, stetig ansteigen kann zwischen 0° und 45°, bevorzugt 20°. Der Winkel sollte bevorzugt im Reibkegel liegen, damit eine Selbsthemmung erreicht wird. Durch den spitzen Winkel α wird eine in Längsrichtung auf den Klemmkörper ausgeübte Querkraft F gemäß F / *tan* α winkelabhängig als Andruckkraft verstärkt, mit welcher der Klemmkörper das Energieabsorptionselement gegen die Innenwandung anpresst. Durch diese winkelabhängige Kraftübersetzung kann eine ausreichend hohe Klemmkraft zur sicheren Fixierung des Energieabsorptionselements in dem Klemmgehäuse erzeugt werden. Das Klemmgehäuse ist seinerseits in Längsrichtung an der Halteeinheit abgestützt, so dass das Energieabsorptionselement sich im Kraftfluss zwischen Stell- und Halteeinheit befindet und somit bei einer relativen Verschiebung von Stell- und Halteeinheit im Crashfall Energie absorbieren kann.

Ein besonderer Vorteil der Erfindung ist, dass das Energieabsorptionselement von dem Klemmkörper quer zu Längsrichtung flächig gegen die Innenwand der Durchgangsöffnung verspannt wird, so dass keine punktuellen Belastungen auftreten, die zu einer Beschädigung der Kanten des Energieabsorptionselements führen können. Dadurch werden Beeinträchtigungen des Energieabsorptionsvermögens (Crashniveaus) und Beeinträchtigungen der Verstellung auch bei wiederholter Fixierung in gleicher Position weitgehend ausgeschlossen. Die Funktionssicherheit und dauerhafte Haltbarkeit der Lenksäule wird damit erhöht.

Eine vorteilhafte Ausführung der Erfindung sieht vor, dass der Klemmkörper als Wälzkörper ausgebildet ist, der in Längsrichtung auf dem Energieabsorptionselement und/oder der Innenwand der Durchgangsöffnung abwälzbar ist. Als Wälzkörper kann beispielsweise eine zylindrische Rolle oder Nadel eingesetzt werden, deren Drehachse quer zur Längsachse ausgerichtet ist, so dass sie in der Durchgangsöffnung in Längsrichtung abrollen kann. Andere bekannte Formen von Wälzkörpern können ebenfalls verwendet werden. Bei einer Relativbewegung von Stelleinheit und Halteeinheit, wie sie sowohl beim Einstellen der Lenkradposition als auch im Crashfall auftritt, kann der Wälzkörper auf der Oberfläche des Energieabsorptionselement oder der Innenwandung der Durchgangsöffnung abrollen, wodurch eine relativ reibungsarme Bewegung innerhalb der Durchgangsöffnung möglich ist, insbesondere auch bei der Verlagerung des Klemmkörpers in den Klemmabschnitt. Dies kommt einer leichten Bedienbarkeit der Verstellung, als auch einer sicheren Verspannung des Energieabsorptionselements im Crashfall entgegen.

Bevorzugt ist vorgesehen, dass der Wälzkörper eine größere Härte hat als das Energieabsorptionselement und/oder das Klemmgehäuse. Dadurch kann sichergestellt werden, dass der Wälzkörper durch die Übertragung der Druckkraft zwischen Klemmgehäuse und Energieabsorptionselement beim Verspannen nicht merklich bleibend verformt wird, was der dauerhaften Funktionssicherheit zugutekommt. Außerdem kann sich der Wälzkörper an seinen Kontaktflächen in die Oberflächen des Energieabsorptionselement und/oder der Innenwand der Durchgangsöffnung einprägen. Im Crashfall, wenn der Druck auf die Kontaktflächen durch die dann besonders großen zwischen Klemmgehäuse und Klemmkörper wirkenden Längskräfte ebenfalls besonders groß wird, kann sich der Wälzkörper plastisch, d.h. unter plastischer Verformung in die Oberflächen von Energieabsorptionselement und/oder Innenwand der Durchgangsöffnung einprägen. Dadurch wird eine besonders feste, kraft- und formschlüssige Verbindung zwischen Klemmgehäuse und Energieabsorptionselement hergestellt, wodurch die Energieeinleitung in das Energieabsorptionselement besonders sicher und zuverlässig ist. Das Sicherheitsniveau wird dadurch erhöht.

Weiterhin ist es vorteilhaft, dass der Klemmkörper in einem Mitnehmerelement gelagert ist. Das Mitnehmerelement kann relativ zum Klemmkörper in Längsrichtung bewegbar sein und nimmt den Klemmkörper in der Durchgangsöffnung mit, wenn es relativ zum Klemmgehäuse in Längsrichtung bewegt wird. Es umfasst einen Lagerkäfig oder Käfig für den Klemmkörper, welches den Klemmkörper lediglich locker umschließen kann, so dass der Klemmkörper bei einer Relativbewegung von Klemmgehäuse und Mitnehmerelement in Längsrichtung innerhalb der Durchgangsöffnung verschoben wird. Wenn der Klemmkörper als Wälzkörper ausgebildet ist, kann das Mitnehmerelement analog zu einem Käfig eines Wälzlagers ausgebildet sein, wobei der Wälzkörper bei einer Relativbewegung von Klemmgehäuse und Mitnehmerelement rotieren und auf den gegenüberliegenden Oberflächen von Energieabsorptionselement und Innenwandung abwälzen kann. Durch Betätigung des Mitnehmerelements, d.h. eine Verschiebung relativ zum Klemmgehäuse in Längsrichtung, bevorzugt nach vorn, kann der Klemmkörper in den Klemmbereich der Durchgangsöffnung verlagert werden. Dadurch wird die Crasheinrichtung aktiviert, und eine Bewegung des Energieabsorptionselements relativ zur Halteeinheit nach vorn, wie sie im Crashfall auftritt, führt zu einer Verspannung des Energieabsorptionselements im Klemmgehäuse.

Bevorzugt sieht die Erfindung vor, dass das Betätigungselement eine quer zur Längsachse angeordnete, drehbar gelagerte Spannachse umfasst, die zur Betätigung der Spanneinrichtung drehbar ist und die zumindest ein Nockenelement aufweist, welches parallel oder senkrecht zur Längsachse gegen das Klemmgehäuse bewegbar ist. Durch Drehung des Betätigungselements, beispielsweise über einen auf der Spannachse angebrachten Betätigungshebel, kann ein an sich bekanntes Spanngetriebe betätigt werden, beispielsweise mit Klemmnocken, Kippstift-System, Kipphebeln oder dergleichen, welches zur Verstellung der Lenksäule aus der Fixierstellung in die Freigabestellung gebracht werden kann. Wird das Spanngetriebe fixiert, wird zum einen die Halteeinheit mit der Stelleinheit verspannt, und zum anderen kann das erfindungsgemäße Klemmgehäuse durch das bezüglich der Spannachse exzentrische Nockenelement quer relativ zur Spannachse bewegt werden, und zwar prinzipiell parallel oder auch senkrecht zur Längsachse. Dadurch ergeben sich in vorteilhafter Weise verschiedene Möglichkeiten zur Realisierung der Crashaktivierung.

Eine Ausführungsform der Erfindung sieht vor, dass das Nockenelement parallel zur Längsachse gegen das Klemmgehäuse bewegbar ist und das Klemmgehäuse und das Mitnehmerelement in Längsrichtung gegeneinander zusammenschiebt. Das Mitnehmerelement kann zu diesem Zweck in Längsrichtung fest, d.h. unverschieblich relativ zur bzw. an der Spannachse gelagert sein. Das Klemmgehäuse kann durch das Nockenelement von der Spannachse radial nach außen gerichtet, parallel zur Längsrichtung, bevorzugt nach hinten, gegen das Mitnehmerelement verschoben werden, so dass der Klemmkörper in dem Klemmgehäuse in Längsrichtung, bevorzugt nach vorn, bis an den Beginn oder bis in den Klemmabschnitt der Durchgangsöffnung bewegt wird. Alternativ kann ein weiteres Nockenelement an der Spannachse angebracht sein, welches auf das Mitnehmerelement wirkt und es bei einer Drehung der Spannachse aktiv in entgegengesetzter Längsrichtung zum Klemmgehäuse bewegt, d.h. bevorzugt nach vorn, so dass ebenfalls der an dem Mitnehmerelement gelagerte Klemmkörper in Richtung zum Klemmabschnitt der Durchgangsöffnung bewegt wird. In dieser Ausführungsform wird durch die Betätigung, d.h. die Drehung der Spannachse aus der Freigabestellung in die Fixierstellung, eine Relativbewegung von Klemmgehäuse und Mitnehmerelement in Längsrichtung bewirkt. Konkret wird das Mitnehmerelement aktiv beim Schließen der Spanneinrichtung in Längsrichtung gegen das Klemmgehäuse verschoben, wobei der Klemmkörper in der Durchgangsöffnung, bevorzugt nach vorn, zum bzw. bis in den Klemmabschnitt verlagert wird. Dabei wird der Klemmkörper durch die keilförmig zusammenlaufenden Innenwände gegen das Energieabsorptionselement angedrückt, so dass dieses im Klemmgehäuse verspannt ist, welches sich in Längsrichtung an der Halteeinheit abstützt. Dadurch erfolgt in Fixierstellung der Spanneinrichtung die Crashaktivierung, bei der das Energieabsorptionselement sich bei einem Crash im Kraftfluss zwischen den dabei in Längsrichtung gegeneinander verschobenen Stell- und Halteinheiten befindet und unter Energieabsorption deformiert wird.

Bei einer weiteren Ausführung der Erfindung ist vorgesehen, dass das Nockenelement senkrecht zur Längsachse gegen das Klemmgehäuse bewegbar ist, wobei das Klemmgehäuse auf das Mitnehmerelement wirkt und an der Stelleinheit fixiert. In dieser Ausführungsform werden das Klemmgehäuse und das Mitnehmerelement beim Schließen der Spanneinrichtung nicht wie bei der vorangehenden Ausführung aktiv in Längsrichtung gegeneinander bewegt, d.h. der Klemmkörper wird zunächst nicht in den Klemmabschnitt verlagert. Stattdessen wird das Mitnehmerelement beim Schließen der Spanneinrichtung an der Stelleinheit festgelegt, wodurch die Crashaktivierung erfolgt. Im Crashfall nimmt die Stelleinheit das Mitnehmerelement nach vorn mit und bewegt es relativ zum Klemmgehäuse, welches sich in Längsrichtung an der feststehenden Halteinheit abstützt. Dabei nimmt das Mitnehmerelement seinerseits den Klemmkörper mit, der folglich in Längsrichtung bis in den Klemmabschnitt der Durchgangsöffnung verlagert wird und das Energieabsorptionselement fest in dem Klemmgehäuse verspannt. Das Energieabsorptionselement befindet sich dann im Kraftfluss zwischen Halte- und Stelleinheit und wandelt bei der Relativbewegung von Halte- und Stelleinheit kinetische Energie in plastische Verformung um.

Zur Realisierung der zuletzt genannten Ausführung ist es vorteilhaft, dass dass das Mitnehmerelement ein Fußteil aufweist, welches zwischen dem Klemmgehäuse und der Stelleinheit angeordnet ist, an dem auf seiner der Stelleinheit zugewandten Seite mindestens ein Haftelement ausgebildet ist. Das oder die Haftelemente können beispielsweise eine haftungs- bzw. reibungserhöhende Beschichtung umfassen, beispielsweise aus einem Polymer, wodurch der Kraftschluss zwischen Mitnehmerelement und Stelleinheit verbessert wird. Alternativ oder zusätzlich kann zumindest ein Formschlusselement vorgesehen sein, beispielsweise ein scharfkantiger, gratartiger Vorsprung oder eine noppenartige Prägung, die sich oberflächlich in die Stelleinheit eingräbt, oder Hartpartikel, die eine größere Härte haben als die Oberfläche der Stelleinheit und an dem Fußteil angeklebt oder gegebenenfalls zusätzlich in eine Polymerschicht eingebettet sein können, so dass sie beim Andrücken für einen Mikroformschluss sorgen. Auf seiner dem Klemmgehäuse zugewandten Seite werden keine haftungserhöhenden Massnahmen vorgenommen, somit ist die Haftkraft bezüglich einer relativen Verschiebung in Längsrichtung zwischen dem Mitnehmerelement und der Stelleinheit höher als zwischen dem Klemmgehäuse und dem Mitnehmerelement. Dadurch wird sichergestellt, dass das Mitnehmerelement im Crashfall von der Stelleinheit sicher mitgenommen wird und in Längsrichtung gegen das Klemmgehäuse bewegt wird. Das Klemmgehäuse stützt sich an der Halteeinrichtung ab, so dass der Klemmkörper in den Klemmabschnitt gelangt und das Energieabsorptionselement an dem Klemmgehäuse sicher festlegt. Durch das Haftelement wird somit die Funktionssicherheit der Crashaktivierung erhöht.

Bevorzugt weist das Mitnehmerelement ein Federelement auf, welches in Längsrichtung, bevorzugt nach vorn, gegen das Klemmgehäuse abstützbar ist. Das Federelement kann bevorzugt als Druckfeder ausgebildet sein, die bevorzugt gegen die lenkradseitige, d.h. hintere Stirnseite des Klemmgehäuses gerichtet ist. Die Länge des Federelements kann so bemessen werden, dass durch die zwischen dem Mitnehmerelement und dem Klemmgehäuse abstandsabhängig wirkende Federkraft der Klemmkörper im unbelasteten Zustand in der Durchgangsöffnung außerhalb, d.h. vor dem Klemmabschnitt mit den keilförmig zusammenlaufenden Innenwänden gehalten wird. In der vorangehend beschriebenen ersten Ausführungsform der Erfindung wird bei der Crashaktivierung das Federelement gegen seine Federkraft komprimiert, nämlich wenn das Klemmgehäuse und das Mitnehmerelement beim Schließen der Spanneinrichtung durch exzentrische Nockenelemente oder dergleichen gegeneinander bewegt werden, um den Klemmkörper in den Klemmabschnitt zu verlagern und dabei das Energieabsorptionselement in dem Klemmgehäuse zu verspannen. Beim Öffnen bzw. Lösen der Spanneinrichtung sorgt das Federelement dafür, dass beim Herausschwenken des oder der Nockenelemente der Klemmkörper selbsttätig nach hinten in Längsrichtung aus dem Klemmabschnitt der Durchgangsöffnung herausgezogen wird und das Energieabsorptionselement zur Längsverstellung der Lenksäule frei in Längsrichtung relativ zum Klemmgehäuse verschiebbar ist. In der oben weiterhin beschriebenen alternativen Ausführung der Erfindung, bei der das Klemmgehäuse zur Crashaktivierung an der Stelleinheit verspannt wird, sorgt das Federelement dafür, dass der Klemmkörper im Normalbetrieb immer außerhalb, d.h. vor dem Klemmabschnitt der Durchgangsöffnung gehalten wird. Erst im Crashfall wird das Mitnehmerelement in Längsrichtung nach vorn gegen das Klemmgehäuse verschoben, wobei das Federelement komprimiert wird.

Das Energieabsorptionselement kann einen Biegedraht und/oder eine Reißlasche aufweisen. Bei Biegedraht, Reißlaschen und kombinierten Biegereißlaschen handelt es sich um zuverlässige und erprobte Energieabsorptionselemente, welche eine Energieabsorption durch Umwandlung der im Crashfall in die Lenksäule in Längsrichtung eingeleiteten kinetischen Energie in Verformungsenergie durch Verbiegen oder Zerreißen ermöglichen. Aufgrund ihrer parallel zur Längsachse langgestreckten, streifenartigen Form können sie gut in einer erfindungsgemäßen Anordnung zur Crashaktivierung eingesetzt werden. Die Durchgangsöffnung in dem Klemmgehäuse kann der Querschnittsform eines Befestigungsabschnitts der jeweiligen Bauform des Energieabsorptionselements angepasst werden, beispielsweise für einen flachen Befestigungsstreifen als relativ schmaler Spalt, der sich quer zur Längsrichtung erstreckt.

Grundsätzlich ist es denkbar und möglich, dass die Stelleinheit ein inneres Mantelrohr umfasst, welches in Längsrichtung teleskopierbar in oder an der Halteeinheit angeordnet ist, die eine äußere Manteleinheit umfasst. In dieser Ausführung wird im Crashfall das innere Mantelrohr in Längsrichtung nach vorn in die äußere Manteleinheit eingeschoben, wobei zur Energieabsorption im Kraftfluss zwischen innerem Mantelrohr und Manteleinheit ein Energieabsorptionselement eingekoppelt ist. Die erfindungsgemäße Crashaktivierung sieht in diesem Fall vor, dass das Energieabsorptionselement am inneren Mantelrohr befestigt ist und das Klemmgehäuse sich an der äußeren Manteleinheit abstützt.

Alternativ kann die Halteeinheit als Konsoleneinheit zur Befestigung an einer Karosserie eines Kraftfahrzeugs ausgebildet sein, und in der eine Stelleinrichtung in Längsrichtung verstellbar aufnehmbar ist. Bei dieser Ausführung wird im Crashfall die gesamte Stelleinheit in Längsrichtung nach vorn relativ zur Konsoleneinheit verschoben, wobei zur Energieabsorption im Kraftfluss zwischen einem Mantelrohr der Stelleinheit und der Konsoleneinheit ein Energieabsorptionselement eingekoppelt ist.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer ersten Ausführung in einer schematischen perspektivischen Gesamtansicht,
- Figur 2: eine Lenksäule gemäß Figur 1 in einer teilweise auseinander gezogenen Darstellung,
- Figur 3: eine Detailansicht einer ersten Ausführung der Spanneinrichtung mit Crashaktivierung der Lenksäule gemäß Figur 1,
- Figur 4: einen Längsschnitt durch die Lenksäule gemäß Figur 1,
- Figur 5: einen Längsschnitt durch die Spanneinrichtung der Lenksäule gemäß Figur 4 in Fixierstellung,
- Figur 6: die Spanneinrichtung gemäß Figur 5 in Freigabestellung,
- Figur 7: eine Lenksäule ähnlich Figur 4 mit einem alternativen Energieabsorptionselement,
- Figur 8: eine zweite Ausführungsform einer erfindungsgemäßen Spanneinrichtung mit Crashaktivierung in Fixierstellung,
- Figur 9: die zweite Ausführungsform einer erfindungsgemäßen Spanneinrichtung mit Crashaktivierung gemäß Figur 8 in Freigabestellung,
- Figur 10: die zweite Ausführungsform einer erfindungsgemäßen Spanneinrichtung mit Crashaktivierung gemäß Figur 8 nach einer Crashauslösung,
- Figur 11: das Mitnehmerelement der zweiten Ausführungsform gemäß Figuren 8 und 9,
- Figur 12: eine detaillierte Schnittansicht durch ein Klemmgehäuse einer erfindungsgemäßen Spanneinrichtung gemäß der Figuren 1 bis 7, bei der zur Erhöhung der Übersichtlichkeit Elemente der Lenksäule ausgeblendet sind,
- Figur 13: eine Lenksäule ähnlich Figur 4 mit einer dritten Ausführungsform einer erfindungsgemäßen Spanneinrichtung mit Crashaktivierung in Freigabestellung,
- Figur 14: eine detaillierte Schnittansicht der erfindungsgemäßen Spanneinrichtung mit Crashaktivierung gemäß Figur 13.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

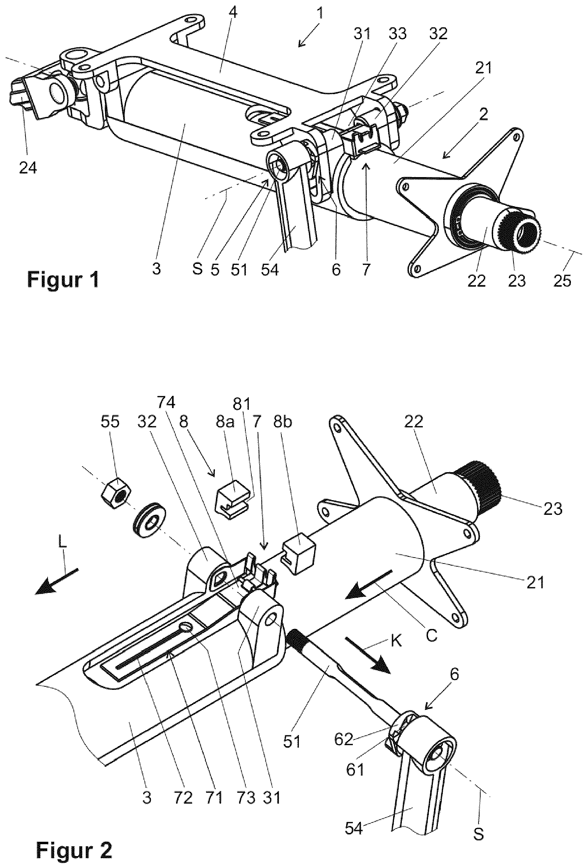

Figur 1 zeigt eine Lenksäule 1, die eine Stelleinheit 2 umfasst, mit einem Mantelrohr 21, in dem eine Lenkspindel 22 um die Längsachse 25 drehbar gelagert ist. An einem bezüglich der Fahrtrichtung hinteren Abschnitt 23 der Lenkspindel 22 kann ein nicht dargestelltes Lenkrad befestigt werden. Die Lenkspindel 22 erstreckt sich von der Lenkradseite, wo sich besagter hinterer Abschnitt 23 befindet, durch die Stelleinheit 2 hindurch nach vorn zur Lenkgetriebeseite, wo die Ausgangswelle 24, auch Lenkzwischenwelle genannt, angeschlossen ist.

Zur Bezeichnung von Richtung und Orientierung bezogen auf die Längsachse 25 werden im Folgenden die Bezeichnungen "vorn" gleichbedeutend mit "lenkgetriebeseitig"/"fahrzeugfrontseitig" und "hinten" gleichbedeutend mit "lenkradseitig"/"fahrzeugheckseitig" benutzt.

Die Stelleinheit 2 wird in einer Halteeinheit 3 gehalten, die ihrerseits an einer Konsoleneinheit 4 befestigt ist, die an einer nicht dargestellten Karosserie eines Kraftfahrzeugs anbringbar ist. Die Halteeinheit 3 bildet in der dargestellten Ausführung eine äußere Manteleinheit, in das Mantelrohr 21 der Stelleinheit 2 in Richtung der Längsachse 25 zur Verstellung der Lenkradposition nach vorn und hinten verstellbar ist.

Die Halteeinheit 3 umfasst eine Ausnehmung, in der die Stelleinheit 2 aufgenommen ist, wobei die Halteeinheit 3 Seitenabschnitte 31 und 32 umfasst, zwischen denen sich ein Schlitz 33 in Richtung der Längsachse 25 erstreckt und auf die von einer Spanneinrichtung 5 quer zur Längsachse 25 eine Klemmkraft ausgeübt werden kann, wodurch diese gegeneinander zusammengedrückt werden können und somit der Schlitz 33 verengt wird. Dadurch kann das in der Trageinheit 3 angeordnete Mantelrohr 21 der Stelleinheit 2 in geschlossener Stellung (Fixierstellung) der Spanneinrichtung 5 in der Halteeinheit 3 festgespannt werden, während in gelöster Stellung (Freigabestellung) die Halteeinheit 3 keine Klemmkraft auf das Mantelrohr 21 ausübt, so dass die Stelleinheit 2 zur Einstellung der Lenkradposition in Richtung der Längsachse 25, d.h. in Längsrichtung L verstellbar ist.

Die Spanneinrichtung 5 weist als Betätigungselement eine Spannachse 51 auf, die um ihre Drehachse S drehbar in den gegenüberliegenden Seitenteilen 31, 32 der Halteeinheit 3 gelagert ist. An der Spannachse 51 ist ein Spannhebel 54 zur manuellen Drehung der Spannachse 51 drehfest angebracht.

Die Spannachse 51 wirkt mit einem Spanngetriebe 6 zusammen, welches in der Darstellung von Figur 2 deutlich erkennbar ist.

In der dargestellten Ausführung umfasst das Spanngetriebe 6 eine fest mit dem Spannhebel 54 und der Spannachse 51 verbundene erste Nockenscheibe 61 und eine mit dem Seitenteil 31 der Halteeinheit 3 verbundene zweite Nockenscheibe 62. Die Nockenscheiben 61 und 62 haben axial gegeneinander gerichtete Nocken die aufeinander gleiten. Zur Fixierung der Stelleinheit 2 wird die Spannachse 51 mittels des Spannhebels 54 gedreht, so dass die Nocken aus einer Löseposition, in der eine Nocke der einen Nockenscheibe 61, 62 jeweils in eine Vertiefung zwischen den Nocken der jeweils anderen Nockenscheibe 62, 61 eingreift, in eine Fixierposition, in der die Nocken mit ihren Erhebungen axial gegeneinander liegen. Dadurch wird ein Klemmhub K auf die Spannachse 51 ausgeübt, was mit dem Pfeil K angedeutet ist. Die Spannachse 51 stützt sich mit der als Widerlager 55 dienenden Mutter an dem Seitenteil 32 ab, so dass der Klemmhub K eine Klemmkraft auf die Halteeinheit 3 überträgt, wodurch die Seitenteile 31 und 32 gegen das dazwischen liegende Mantelrohr 21 angedrückt werden und die Stelleinheit 2 in der Halteeinheit 3 bezüglich einer Verschiebung in Längsrichtung L fixiert ist.

Zur Größe des Klemmhubs K ist anzumerken, dass dieser prinzipiell nahe bei Null liegen kann, wenn die Halteeinheit 3 das Mantelrohr 21 der Stelleinheit 2 bereits berührend umgreift, so dass zur Verspannung lediglich die Klemmkraft auf die Seitenteile 31 und 32 erhöht werden muss, wobei diese sich im geringen Maße auf das Mantelrohr 21 zu bewegen. In der Praxis wird jedoch aufgrund der unvermeidlichen elastischen Verformungen der Halteeinheit 3 und der Spanneinrichtung 5 immer ein minimaler Klemmhub K auftreten, wobei dieser in Bereichen zwischen 0,5mm und 4 mm liegen kann.

Eine Energieabsorptionseinrichtung 7, auch als Crasheinrichtung 7 bezeichnet, umfasst ein Energieabsorptionselement 71, auch als Crashelement bezeichnet, welches in der in den Figuren 1 bis 6 dargestellten Ausführung als langgestreckte Lasche in Form eines Blechstreifens ausgebildet ist, die ein parallel zur Längsachse 25 verlaufendes Langloch 72 aufweist. Das als Lasche ausgebildete Energieabsorptionselement 71 ist mittels eines am hinteren Ende des Langlochs 72 durchgeführten Befestigungsbolzens 73 mit dem Mantelrohr 21 der Stelleinheit 2 fest verbunden. Im Crashfall führt das Mantelrohr 21 relativ zur Halteeinheit 3 eine Relativbewegung aus, was mit dem Pfeil C angedeutet ist. Dadurch, dass der Bolzen 73 einen Durchmesser hat, der größer ist als die Breite des Langlochs 72, wird bei der relativen Verschiebung von Bolzen 73 und des als Lasche ausgebildeten Energieabsorptionselements 71 im Crashfall das Langloch 72 von dem Bolzen 73 aufgeweitet und durch die dabei erfolgende plastische Verformung wird kinetische Energie absorbiert bzw. umgesetzt.

In einer nicht dargestellten Ausführungsform ist das Langloch 72 des Energieabsorptionselements 71 durch eine Prägung, ähnlich einer Perforation, ersetzt, die durch den sich im Crash verlagernden Bolzen 73 aufgerissen wird. Dies ermöglicht die Bereitstellung einer höheren Energieabsorption. Es ist auch denkbar und möglich, dass keinerlei Prägung vorgesehen ist, so kann eine noch höhere Energieabsorption bereitgestellt werden.

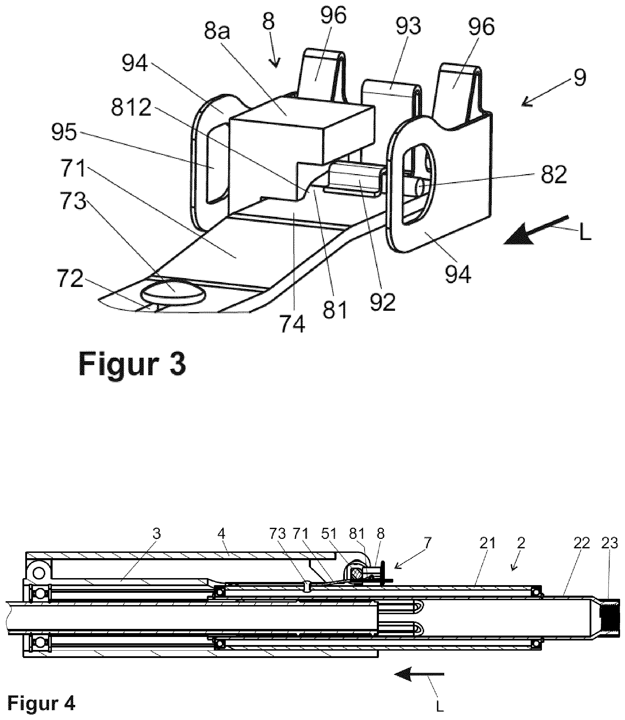

Die Crasheinrichtung 7 weist ein Klemmgehäuse 8 auf, welches aus zwei spiegelsymmetrisch aufgebauten Gehäusehälften 8a und 8b senkrecht zur Längsachse 25 zusammengesetzt ist. In Figur 3 ist die in dieser Ansicht vordere Gehäusehälfte 8b zur besseren Übersicht weggelassen. Darin ist erkennbar, dass das Klemmgehäuse 8 eine in Längsrichtung L durchgehende Durchgangsöffnung 81 aufweist, auch als Spalt 81 bezeichnet, durch die ein Befestigungsabschnitt 74 des als Lasche ausgebildeten Energieabsorptionselements 71 hindurchgeführt ist.

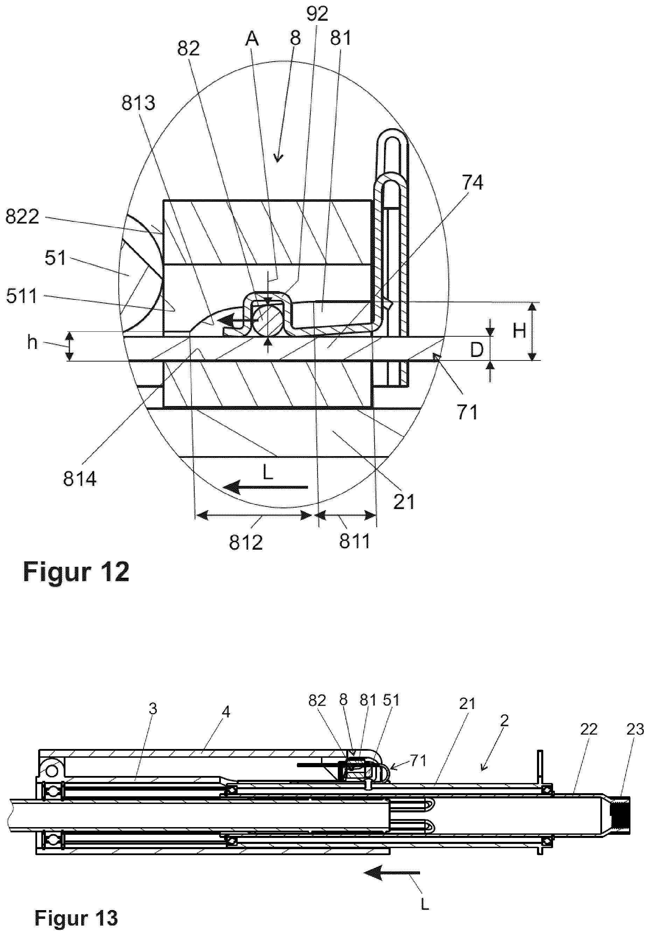

Im Bereich des Befestigungsabschnitts 74 ist ein Klemmkörper 82 benachbart zur als Lasche ausgebildeten Energieabsorptionselement 71 angeordnet, der im gezeigten Beispiel als Nadel bzw. Rolle 82 ausgebildet ist. Wie aus Figur 12 ersichtlich ist, wo eine vergrößerte schematische Schnittdarstellung des Klemmgehäuses 8 gezeigt ist, ist die Summe der Abmessungen des als Wälzkörper ausgebildeten Klemmkörpers 82 und des Befestigungsabschnittes 74 des Energieabsorptionselements 71 quer zur Längsrichtung gemessen, d.h. die Dicke D des Befestigungsabschnitts 74 zusammen mit dem Durchmesser A der dazu benachbart angeordneten als Rolle ausgebildeten Klemmkörpers 82, kleiner als die Abmessung H des größten Durchgangsquerschnitts im hinteren Bereich 811 der Durchgangsöffnung 81. Somit kann die als Lasche ausgebildeten Energieabsorptionselement 71 frei in Längsrichtung L bewegt werden, wenn sich der Wälzkörper 82 in diesem Bereich 811 der Durchgangsöffnung 81befindet.

Im vorderen Bereich der Durchgangsöffnung 81 ist ein Klemmabschnitt 812 ausgebildet, in dem der geneigte Innenwandbereich 813 keilförmig zu der gegenüberliegenden Innenwand 814 zusammenläuft. Dadurch verjüngt sich der Durchgangsquerschnitt im Klemmabschnitt 812 keilförmig nach vorn. Am vorderen Ende hat die Durchgangsöffnung 81 quer zur Längsrichtung gemessen eine Abmessung h, die kleiner ist als die Abmessung H im hinteren Bereich 811. Die Dicke D des im Beispiel als Lasche ausgebildeten Energieabsorptionselement 71, ist kleiner als h, so dass die Lasche für sich allein in Längsrichtung L durch die Durchgangsöffnung 81 verschoben werden kann. Der Klemmkörper 82, der beispielsweise als Wälzkörper ausgebildet sein kann, weist eine Dicke A quer zur Längsrichtung auf. Die Summe der Abmessungen bestehend aus der Dicke A des Klemmkörpers 82 und der Dicke D des Befestigungsabschnitts 74 des Energieabsorptionselements 71 zwischen den gegenüberliegenden Innenwänden 813, 814 (das heisst quer zur Längsrichtung gemessen), ist dabei größer ist als die Abmessung h des kleinsten Durchgangsquerschnitts des Klemmabschnitts 812. Wird der Wälzkörper, der Klemmkörper 82, in Pfeilrichtung nach vorn in den Klemmabschnitt 812 verlagert, wird er zwischen dem geneigten Innenwandbereich 813 und dem Befestigungsabschnitt 74 der Lasche 71 eingeklemmt. Dadurch wird der Befestigungsabschnitt 74 gegen die gegenüberliegende Innenwand 814 angepresst und somit die Lasche, das Energieabsorptionselement 71, kraftschlüssig in der Durchgangsöffnung 81 des Klemmkörpers 73 fixiert. Dadurch ist die Crasheinrichtung 7 aktiviert, d.h. wenn nun bei einem Crash die Stelleinheit 2 bzw. deren Mantelrohr 21 relativ zum Klemmgehäuse 8 in Längsrichtung L nach vorn bewegt wird, wird der Befestigungsabschnitt 74 des Energieabsorptionselements 71 ebenfalls nach vorn verschoben, wobei der bereits zwischen dem Befestigungsabschnitt 74 des Energieabsorptionselement 71 und dem geneigten Innenwandbereich 813 eingeklemmte Klemmkörper 82 nach vorn mitgenommen wird und dabei in Längsrichtung L in den Klemmabschnitt 812 mitgenommen wird. Dadurch wiederum wird der Befestigungsabschnitt 74 des Energieabsorptionselement 71 noch stärker in der Durchgangsöffnung 81 verspannt. Die Verspannung erfolgt besonders effektiv, wenn der Klemmkörper 82 als Wälzkörper, beispielsweise wie dargestellt als Rolle oder Nadel ausgebildet ist. Der als Wälzkörper ausgebildete Klemmkörper 82 kann nämlich auf dem geneigten Innenwandbereich 813 und auf der diesem zugewandten Oberseite des Befestigungsabschnittes 74 des Energieabsorptionselements 71 abrollen, so dass die Verlagerung in Längsrichtung in den Klemmabschnitt 812 relativ reibungsarm erfolgen kann und entsprechend eine hohe Klemmkraft auf den Befestigungsabschnitt 74 des Energieabsorptionselement 71 ausgeübt wird. Dadurch ist gewährleistet, dass im Crashfall das Energieabsorptionselement 71 zur Energieaufnahme besonders sicher im Kraftfluss zwischen Stelleinheit 2 und Halteeinheit 3 fixiert ist.

In den Figuren 4, 5 und 6 ist eine erste Ausführungsform einer erfindungsgemäßen Crasheinrichtung 7 dargestellt, wobei das Energieabsorptionselement 71 wie in Figur 3 ausgebildet ist. In dieser Ausführung ist der Klemmkörper 82 in einem Mitnehmerelement 9 gelagert. Im Einzelnen weist das Mitnehmerelement 9 einen Haltearm 91 auf der in seinem vorderen Endbereich einen Käfigabschnitt 92 aufweist, in dem der als Wälzkörper ausgebildete Klemmkörper 82 ähnlich wie in einem Wälzlager lose gehaltert ist, so dass er um seinen Momentanpol frei rotieren kann, aber in Längsrichtung am Mitnehmerelement 9 gehalten wird. Der Haltearm 91 erstreckt sich in Längsrichtung L von einem Stützelement 93 nach vorn, welches sich seinerseits plattenförmig quer zur Längsachse 25 erstreckt. Weiterhin erstrecken sich von dem Stützelement 93 zwei seitliche Mitnehmerarme 94, die sich parallel zur Längsachse 25 in Richtung der Achse S der Spannachse 51 gegenüberliegen. Die Mitnehmerarme 94 weisen bezüglich der Spannachse 51 koaxial deckungsgleich ausgebildete Öffnungen 95 auf, welche als sich in Längsrichtung erstreckende Langlöcher ausgebildet sind. An dem Stützelement 93 ist eine Feder 96 ausgebildet, welche als blattförmige Druckfeder ausgebildet ist, die von der Vorderseite, also wo sich der Haltearm 91 und die Mitnehmerarme 94 befinden, nach hinten, also entgegen der Längsrichtung L federnd gegen das Stützelement 93 abstützbar ist.

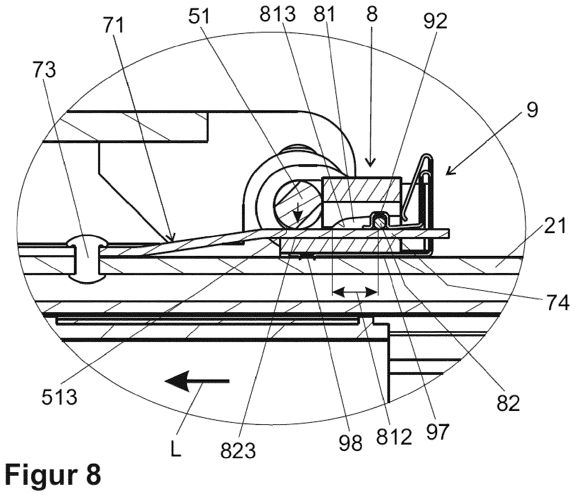

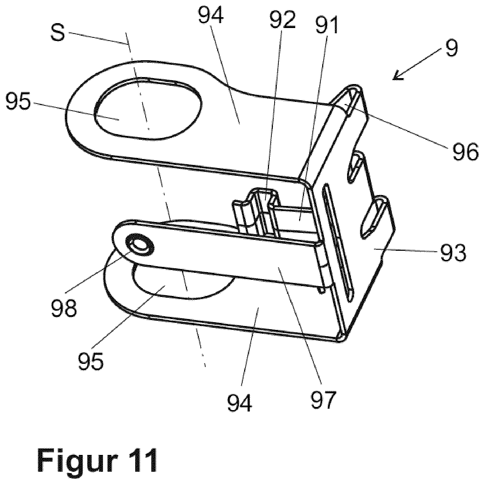

In der zweiten Ausführungsform der Erfindung, die in den Figuren 8, 9 und 10 wiedergegeben ist, hat das Mitnehmerelement 9, wie in der Figur 11 detailiert dargestellt, ein zusätzliches Fußteil 97, das in der ersten Ausführung gemäß den Figuren 4, 5 und 6 nicht vorhanden ist. Das Fußteil 97 erstreckt sich parallel zum Haltearm 91 von dem Stützelement 93 im Bereich zwischen den Mitnehmerarmen 94 nach vorn. Auf seiner Unterseite, die vom Haltearm 91 abgewandt ist, kann das Fußteil 97 Formschlusselemente 98 aufweisen, die beispielsweise als scharfkantige, grat- oder schneidenartige Vorsprünge ausgebildet sein können.

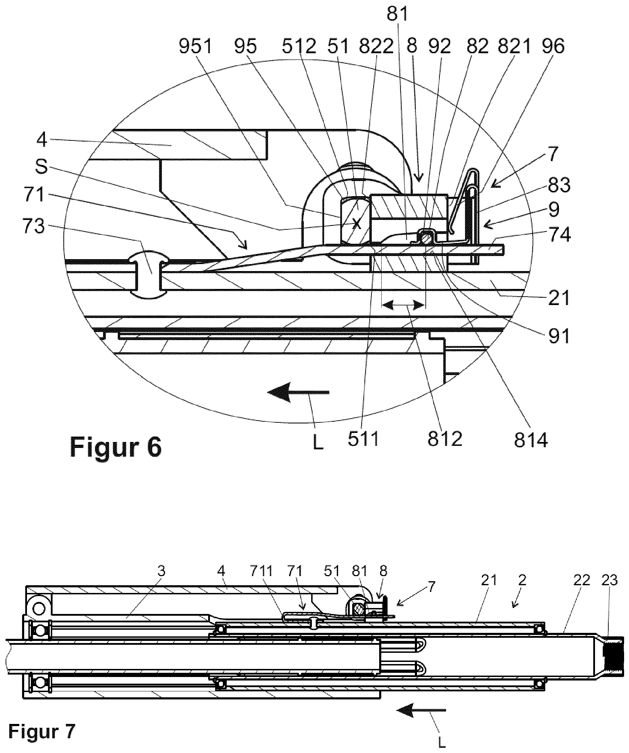

Figur 6 zeigt die Crasheinrichtung 7, die gemäß einer ersten Ausführungsform in einer Lenksäule 1 gemäß Figur 4 realisiert ist, in Freigabestellung. Dabei ist deutlich erkennbar, dass der Klemmkörper 82 in dem Käfigabschnitt 92 des Haltearms 91 gelagert ist. Der Haltearm 91 erstreckt sich so von hinten in Längsrichtung L in die Durchgangsöffnung 81, dass sich der Klemmkörper 82 außerhalb hinter dem Klemmabschnitt 812 befindet. Dadurch, dass sich die Feder 96 nach vorn an der hinteren (=lenkradseitigen) Stirnseite 821 des Klemmgehäuses 8 abstützt, wird der Klemmkörper 82 in dieser Position gehalten. Dabei hat der Klemmkörper 82 in der Durchgangsöffnung 81 quer zur Längsrichtung Spiel zum Energieabsorptionselement 71, so dass dieses in und entgegen der Längsrichtung L relativ zum Klemmgehäuse 8 bewegt werden kann. Damit kann das Mantelrohr 21 der Stelleinheit 2 gegenüber der Konsoleneinheit 4 zur Anpassung der Lenkradposition in Längsrichtung verstellt werden.

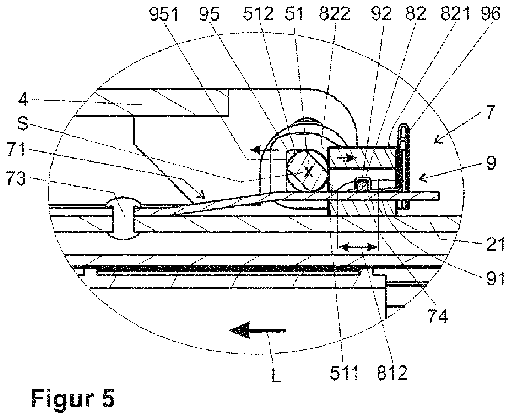

Die Spannachse 51 ist durch die Öffnungen 95 hindurchgeführt und liegt dabei mit ihrem Außenumfang bezüglich der Längsachse 25 hinten an der vorderen Stirnseite 822 des Klemmgehäuses 8 an, und bezüglich der Längsachse 25 vorn an Steuerflächen 951, die jeweils in den Öffnungen 95 des Mitnehmerelements 9 ausgebildet sind. Wird nun die Spannachse 51 aus der Freigabestellung gemäß Figur 6 entgegen dem Uhrzeigersinn in die Fixierstellung gemäß Figur 5 gedreht, wird ein an der Spannachse 51 exzentrisch vorstehender erster Nocken 511 nach hinten gegen die vordere Stirnseite 822 des Klemmgehäuses 8 bewegt, während ein ebenfalls an der Spannachse 51 exzentrisch vorstehender zweiter Nocken 512, der dem ersten Nocken 511 radial gegenüberliegt, von vorn gegen die Steuerfläche 951 angedrückt wird. Dadurch bewegen sich das Mitnehmerelement 9 und das Klemmgehäuse 8 parallel zur Längsrichtung L relativ zueinander, wie dies in Figur 4 mit den Pfeilen angedeutet ist, wobei die Feder 96 zwischen der Stirnseite 821 und dem Stützelement 93 zusammengedrückt wird. Dies hat zur Folge, dass der Haltearm 91 von hinten tiefer in die Durchgangsöffnung 81 eindringt und entsprechend der Klemmkörper 82 bis in den Klemmbereich 812 verlagert wird. Damit ist die Crasheinrichtung 7 wie vorangehend beschrieben aktiviert.

Wird die Spannachse 51 aus der Fixierstellung gemäß Figur 5 im Uhrzeigersinn in die Freigabestellung gemäß Figur 6 bewegt, stützt sich das Mitnehmerelement 9 mit der Feder 96 gegen die hintere Stirnseite 821 des Klemmgehäuses 8 ab, so dass durch die Federkraft der Klemmkörper 82 nach hinten aus dem Klemmabschnitt 812 herausbewegt wird, so dass das Energieabsorptionselement 71 wieder frei in Längsrichtung L verschiebbar ist.

Figur 7 zeigt eine Variante der Ausführung gemäß Figur 4, wobei der Unterschied darin besteht, dass das Energieabsorptionselement 71 als Biegestreifen ausgebildet ist mit einer Umbiegung 711. Im Crashfall wird kinetische Energie in eine Biegung umgesetzt. Die Funktionsweise ist ansonsten wie vorangehend beschrieben.

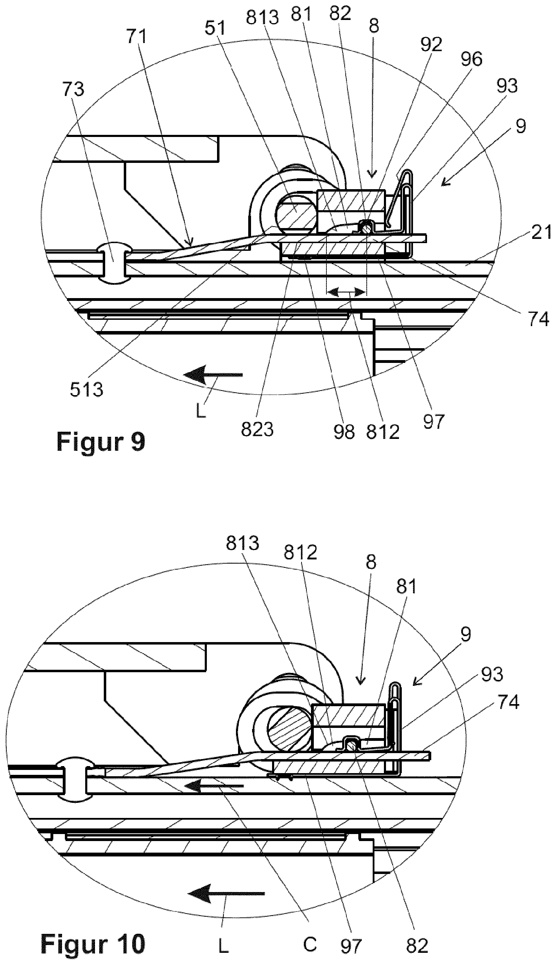

Figur 8, 9 und 10 zeigen eine zweite Ausführungsform einer erfindungsgemäßen Crasheinrichtung 7, wobei Figur 9 die Freigabestellung, Figur 8 die Fixierstellung mit Crashaktivierung und Figur 10 die Situation nach einem erfolgten Crash wiedergibt.

Im Unterschied zur der ersten beschriebenen Ausführung erfolgt die Crashaktivierung nicht durch eine aktive relative Bewegung von Klemmgehäuse 8 und Mitnehmerelement 9 durch die Betätigung der Spanneinrichtung 5, sondern durch eine Festlegung des Mitnehmerelement 9 an der Stelleinrichtung 2 bzw. am Mantelrohr 21 der Stelleinrichtung 2 durch die Betätigung der Spanneinrichtung 5.

Im Einzelnen weist das Mitnehmerelement 9 ein Fußteil 97 auf, welches sich wie in Figur 11 gezeigt von dem Stützelement 93 nach vorn erstreckt. In der Einbauposition gemäß Figuren 8, 9 und 10 befindet sich dieses Fußteil 97 zwischen der Unterseite des Klemmgehäuses 8 und der diesem zugewandten Außen- bzw. Oberseite des Mantelrohrs 21. Dabei weist das Fußteil 97 auf seiner gegen das Mantelrohr 21 anliegenden Unterseite bevorzugt Formschlusselemente 98 auf, oder ist dort mit einer reibungserhöhenden Beschichtung versehen, beispielsweise aus einem Polymer, wodurch der Kraftschluss zwischen dem Mitnehmerelement 9 und dem Mantelrohr 21 - und damit der Stelleinheit 2 - verbessert wird.

Zur Crashaktivierung hat die Spannachse 51 einen exzentrisch vorstehenden Nocken 513, der quer zur Längsachse 25, d.h. bezüglich dieser parallel zu einer Radialrichtung, in Richtung gegen eine Andruckfläche 823 bewegt werden kann. Dabei erstreckt sich das Klemmgehäuse 8 in diesem Bereich zwischen der Andruckfläche 823 und dem Mantelrohr 21 bzw. der Stelleinheit 2, so dass es folglich durch den Nocken 513 gegen das Mantelrohr 21 angedrückt werden kann. Im Bereich der Andruckfläche 823 erstreckt sich das Fußteil 97 wie beschrieben zwischen dem Klemmgehäuse 9 und dem Mantelrohr 21.

In der Freigabestellung gemäß Figur 9 kann das Energieabsorptionselement 71 frei zwischen der Spannachse 51 und der Andruckfläche 823 hindurch bewegt werden, ebenso kann das Klemmgehäuse 8 und das Mitnehmerelement 9 frei parallel zur Längsrichtung 2 relativ zum Mantelrohr 21 bewegt werden, d.h. die Unterseite des Fußteils 97 kann auf der Oberfläche des Mantelrohrs 21 entlanggleiten. Somit kann zur Anpassung der Lenkradposition die Stelleinheit 2 parallel zur Längsachse relativ zur Konsoleneinheit 4 verstellt werden.

Durch Drehung der Spannachse 51 entgegen dem Uhrzeigersinn wird die Freigabestellung gemäß Figur 9 in die Fixierstellung gemäß Figur 8 gebracht. Dabei wird der Nocken 513 von oben, d.h. quer zur Längsrichtung L gegen die Andruckfläche 823 geschwenkt, wobei der Nocken 513 das dort anliegende Energieabsorptionselement 7 gegen besagte Andruckfläche 823 andrückt, wie dies in Figur 8 mit dem Pfeil angedeutet ist. Das bezüglich der Andruckkraft dort im Kraftfluss liegende Klemmgehäuse 8 und das zwischen Klemmgehäuse 8 und Mantelrohr 21 befindliche Fußteil 97 werden gegeneinander und gegen das Mantelrohr 21 angepresst. Durch die Reibungskräfte, die zwischen den im Kraftfluss in Serie liegenden Bauteilen wirken, sind Klemmachse 51, Energieabsorptionselement 7, Klemmgehäuse 8, Fußteil 97 und Mantelrohr 21 bezüglich einer Belastung in Längsrichtung L kraftschlüssig miteinander verbunden.

Mit den Formschlusselementen 98 auf seiner zum Mantelrohr 21 gewandten Unterseite gräbt sich das Fußteil 97 in die Oberfläche des Mantelrohrs 21 ein, wodurch zusätzlich eine Formschluss erreicht wird, so dass die Verbindung zwischen Mitnehmerelement 9 und Mantelrohr 21 fester ist als die weiteren genannten kraftschlüssigen Verbindungen. Alternativ oder zusätzlich kann die Verbindung zwischen Fußteil 97 und Oberfläche des Mantelrohrs 21 auch durch eine reibungserhöhende Beschichtung auf der Unterseite des Fußteils 97 verstärkt werden.

Wirkt im Crashfall eine große Kraft in Längsrichtung L auf das Lenkrad und die damit verbundene der Stelleinheit 2, wie dies analog zur Darstellung in Figur 2 mit dem Pfeil C eingezeichnet ist, wird das Mantelrohr 21 nach vorn verschoben und nimmt das Mitnehmerelement 9 nach vorn mit. Durch die vorangehend beschriebene höhere Reibung zwischen Mitnehmerelement 9 und Mantelrohr 21 gleitet das Mitnehmerelement 9 nach vorn relativ zum Klemmgehäuse 8, welches sich an der Klemmachse 51 abstützt. Dadurch taucht der Haltearm 91 nach vorn tiefer in die Durchgangsöffnung 81 ein, und der Klemmkörper 82 wird nach vorn in den keilförmig zusammenlaufenden Klemmabschnitt 812 verlagert, wie dies in Figur 10 mit dem Pfeil angedeutet ist. Dadurch wird das Energieabsorptionselement 71 in der Durchgangsöffnung 81 und auf diese Weise mit dem Klemmgehäuse 8 fest verspannt, wie dies weiter oben bereits zu Figur 5 ausführlich beschrieben ist. Die in Längsrichtung L auf das Energieabsorptionselement 71 wirkende Kraft führt wie erläutert zu einer noch festeren Verkeilung den Klemmkörpers 8, wodurch die im Crashfall eingetragene kinetische Energie beim Aufprall eines Fahrers sicher in das Energieabsorptionselement 71 eingeleitet und dort absorbiert bzw. in Verformung umgesetzt werden kann.

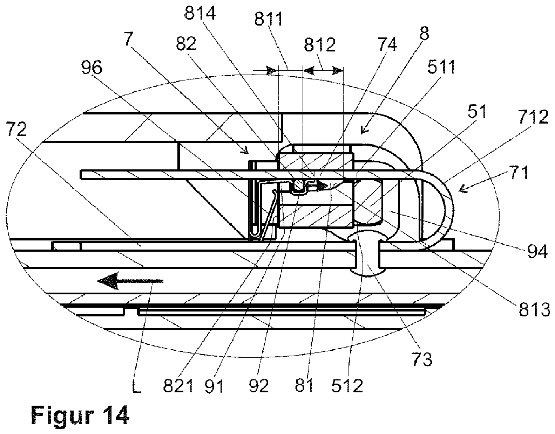

Figur 13 und 14 zeigen eine Lenksäule ähnlich Figur 4 mit einer dritten Ausführungsform einer erfindungsgemäßen Spanneinrichtung mit Crashaktivierung in der Freigabestellung. Dabei ist deutlich erkennbar, dass der Klemmkörper 82 in dem Käfigabschnitt 92 des Haltearms 91 gelagert ist. Der Haltearm 91 erstreckt sich so in Längsrichtung L in die Durchgangsöffnung 81, dass sich der Klemmkörper 82 außerhalb vor dem Klemmabschnitt 812 befindet. Dadurch, dass sich die Feder 96 nach hinten an der vorderen (=fahrzeugfrontseitigen) Stirnseite 821 des Klemmgehäuses 8 abstützt, wird der Klemmkörper 82 in dieser Position gehalten. Dabei hat der Klemmkörper 82 in der Durchgangsöffnung 81 quer zur Längsrichtung Spiel zum Energieabsorptionselement 71, so dass dieses in und entgegen der Längsrichtung L relativ zum Klemmgehäuse 8 bewegt werden kann. Damit kann das Mantelrohr 21 der Stelleinheit 2 gegenüber der Konsoleneinheit 4 zur Anpassung der Lenkradposition in Längsrichtung verstellt werden.

Wie aus Figur 14 ersichtlich ist die Summe der Abmessungen des als Wälzkörper ausgebildeten Klemmkörpers 82 und des Befestigungsabschnittes 74 des Energieabsorptionselements 71 quer zur Längsrichtung gemessen, d.h. die Dicke des Befestigungsabschnitts 74 zusammen mit dem Durchmesser der dazu benachbart angeordneten als Rolle ausgebildeten Klemmkörpers 82, kleiner als die Abmessung des größten Durchgangsquerschnitts im vorderen Bereich 811 der Durchgangsöffnung 81. Somit kann das als Lasche ausgebildete Energieabsorptionselement 71 frei in Längsrichtung L bewegt werden, wenn sich der Wälzkörper 82 in diesem Bereich 811 der Durchgangsöffnung 81befindet.

Im hinteren (=fahrzeugheckseitigen) Bereich der Durchgangsöffnung 81 ist ein Klemmabschnitt 812 ausgebildet, in dem der geneigte Innenwandbereich 813 keilförmig zu der gegenüberliegenden Innenwand 814 zusammenläuft. Dadurch verjüngt sich der Durchgangsquerschnitt im Klemmabschnitt 812 keilförmig nach hinten, d.h. in Richtung des hinteren Endes 23 der Lenkspindel 22. Am hinteren Ende hat die Durchgangsöffnung 81 quer zur Längsrichtung gemessen eine Abmessung, die kleiner ist als die Abmessung im vorderen (=fahrzeugfrontseitigen) Bereich 811. Die Dicke des im Beispiel als Lasche ausgebildeten Energieabsorptionselement 71, ist kleiner als die Abmessung am hinteren Ende der Durchgangsöffnung 81, so dass die Lasche für sich allein in Längsrichtung L durch die Durchgangsöffnung 81 verschoben werden kann. Der Klemmkörper 82, der beispielsweise als Wälzkörper ausgebildet sein kann, weist eine Dicke quer zur Längsrichtung auf. Die Summe der Abmessungen bestehend aus der Dicke des Klemmkörpers 82 und der Dicke des Befestigungsabschnitts 74 des Energieabsorptionselements 71 zwischen den gegenüberliegenden Innenwänden 813, 814 (das heisst quer zur Längsrichtung gemessen), ist dabei größer ist als die Abmessung des kleinsten Durchgangsquerschnitts des Klemmabschnitts 812. Wird der Wälzkörper, der Klemmkörper 82, in Pfeilrichtung nach hinten (=fahrzeugheckseitig) in den Klemmabschnitt 812 verlagert, wird er zwischen dem geneigten Innenwandbereich 813 und dem Befestigungsabschnitt 74 des als Energieabsorptionselements 71 eingeklemmt. Dadurch wird der Befestigungsabschnitt 74 gegen die gegenüberliegende Innenwand 814 angepresst und somit die Lasche, das Energieabsorptionselement 71, kraftschlüssig in der Durchgangsöffnung 81 des Klemmkörpers 73 fixiert. Dadurch ist die Crasheinrichtung 7 aktiviert, d.h. wenn nun bei einem Crash die Stelleinheit 2 bzw. deren Mantelrohr 21 relativ zum Klemmgehäuse 8 in Längsrichtung L nach vorn bewegt wird, wird der Befestigungsabschnitt 74 des Energieabsorptionselements 71 zunächst nach vorn verschoben, bis die Umbiegung 712 des Energieabsorptionselements 71 an der Spannachse zur Anlage kommt. Daraufhin kehrt sich die Bewegungsrichtung des Befestigungsabschnittes 74 um, so dass dieser sich in Längsrichtung nach hinten bewegt, so dass der eingeklemmte Klemmkörper 82 nach hinten mitgenommen wird und dabei in Längsrichtung L in den Klemmabschnitt 812 mitgenommen wird. Dadurch wiederum wird der Befestigungsabschnitt 74 des Energieabsorptionselement 71 in der Durchgangsöffnung 81 verspannt. Das Langloch 72, welches im Energieabsorptionselement 71 angeordnet ist, wird nach dem Festsetzen der Energieabsorptionselements 71 in der Crasheinrichtung 7 von dem Bolzen 73 aufgeweitet und durch die dabei erfolgende plastische Verformung wird kinetische Energie absorbiert bzw. umgesetzt.

**Bezugszeichenliste**

| | | | |
|---|---|---|---|
| 1 | Lenksäule | 81 | Durchgangsöffnung |
| 2 | Stelleinheit | 811 | Bereich |
| 21 | Mantelrohr | 812 | Klemmabschnitt |
| 22 | Lenkspindel | 813 | Innenwandbereich |
| 23 | hinterer Abschnitt | 814 | Innenwand |
| 24 | Ausgangswelle | 821 | hintere Stirnseite |
| 25 | Längsachse | 822 | vordere Stirnseite |
| 3 | Halteeinheit | 823 | Andruckfläche |
| 31, 32 | Seitenabschnitt | 82 | Klemmkörper (Wälzkörper) |
| 33 | Schlitz | 9 | Mitnehmerelement |
| 4 | Konsoleneinheit | 91 | Haltearm |
| 5 | Spanneinrichtung | 92 | Käfigabschnitt |
| 51 | Spannachse | 93 | Stützelement |
| 511 | erster Nocken | 94 | Mitnehmerarme |
| 512 | zweiter Nocken | 95 | Öffnungen |
| 513 | Nocken | 951 | Steuerfläche |
| 54 | Spannhebel | 96 | Feder |
| 55 | Widerlager | 97 | Fußteil |
| 6 | Spanngetriebe | 98 | Formschlusselement |
| 61, 62 | Nockenscheibe | K | Klemmhub |
| 7 | Energieabsorptionseinrichtung (Crasheinrichtung) | L | Längsrichtung |
| | | | Achse |
| 71 | Energieabsorptionselement | H | Abmessung Durchgangsquerschnitt |
| 711 | Umbiegung | | |
| 712 | Umbiegung | h | minimale Abmessung Durchgangsquerschnitt |
| 72 | Langloch | | |
| 73 | Bolzen | D | Dicke |
| 74 | Befestigungsabschnitt | | |
| 8 | Klemmgehäuse | | |

## Patentansprüche

1. Lenksäule (1) für ein Kraftfahrzeug, umfassend
eine **Stelleinheit** (2), in der eine Lenkspindel (22) um ihre Längsachse (25) drehbar gelagert ist,
eine **Halteeinheit** (3), die mit der Karosserie des Kraftfahrzeugs verbindbar ist und die die Stelleinheit (2) lagert, und
eine **Spanneinrichtung** (5), die in einer Fixierstellung die Stelleinheit (2) in einem Normalbetrieb relativ zur Halteeinheit (3) festlegt und die in einer Freigabestellung eine Verstellung der Stelleinheit (2) relativ zur Halteeinheit (3) zumindest in eine Längsrichtung (L) freigibt,
wobei die Stelleinheit im Normalbetrieb bei Überschreiten einer vordefinierten Kraft in die Längsrichtung (L) verschiebbar ist,
wobei zumindest ein **Energieabsorptionselement** (71) vorgesehen ist, welches sich parallel zur Längsrichtung (L) in eine Öffnung (81) eines **Klemmgehäuses** (8) hinein erstreckt, wobei das Klemmgehäuse (8) im Normalbetrieb in Längsrichtung an der Halteeinheit (3) abgestützt ist,
und die Spanneinrichtung (5) ein **Betätigungselement** (51) umfasst, welches mit dem Klemmgehäuse (8) zusammenwirkt, wobei in Freigabestellung das Energieabsorptionselement (71) in der Durchgangsöffnung (81) des Klemmgehäuses (8) in Längsrichtung (L) bewegbar ist und in Fixierstellung das Energieabsorptionselement (71) in der Durchgangsöffnung (81) des Klemmgehäuses (8) festlegbar ist, **dadurch gekennzeichnet,**
**dass** die Öffnung (81) einem **Klemmabschnitt** (812) mit zumindest abschnittsweise in **Längsrichtung (L) keilförmig gegeneinander zusammenlaufenden Innenwandbereichen** (813, 814) aufweist, und
zwischen dem Energieabsorptionselement (71) und der Innenwand (813, 814) der Öffnung (81) mindestens ein **Klemmkörper** (82) angeordnet ist, der in den Klemmabschnitt (812) verlagerbar ist,
wobei die Summe der Abmessungen des Klemmkörpers (82) und des Energieabsorptionselements (71) zwischen den gegenüberliegenden Innenwänden (813, 814) gemessen größer ist als der kleinste Abstand (h) zwischen den zusammenlaufenden Innenwandbereichen (813, 814).

2. Lenksäule (1) nach Anspruch 1, **dadurch gekennzeichnet, dass** der Klemmkörper als **Wälzkörper** (82) ausgebildet ist, der in Längsrichtung (L) auf dem Energieabsorptionselement (71) und/oder der Innenwand (813, 814) der Durchgangsöffnung (81) abwälzbar ist.

3. Lenksäule (1) nach Anspruch 2, **dadurch gekennzeichnet, dass** der Wälzkörper (82) eine größere Härte hat als das Energieabsorptionselement (71) und/oder das Klemmgehäuse (8).

4. Lenksäule (1) nach einem der vorangehenden Ansprüche, **dadurch gekennzeichnet, dass** der Klemmkörper (82) in einem **Mitnehmerelement** (9) gelagert ist.

5. Lenksäule (1) nach einem der vorangehenden Ansprüche, **dadurch gekennzeichnet, dass** das Betätigungselement (51) eine quer zur Längsachse (25) angeordnete, drehbar gelagerte Spannachse (51) umfasst, die zur Betätigung der Spanneinrichtung (5) drehbar ist und die zumindest ein Nockenelement (511, 512, 513) aufweist, welches parallel oder senkrecht zur Längsachse (25) gegen das Klemmgehäuse (8) bewegbar ist.

6. Lenksäule (1) nach Anspruch 5, **dadurch gekennzeichnet, dass** das Nockenelement (511, 512) parallel zur Längsachse (25) gegen das Klemmgehäuse (8) bewegbar ist und das Klemmgehäuse (8) und das Mitnehmerelement (9) in Längsrichtung (L) gegeneinander zusammenschiebt.

7. Lenksäule (1) nach Anspruch 5, **dadurch gekennzeichnet, dass** das Nockenelement (513) senkrecht zur Längsachse (25) gegen das Klemmgehäuse (8) bewegbar ist, wobei das Klemmgehäuse (8) auf das Mitnehmerelement (9) wirkt und an der Stelleinheit (2) fixiert.

8. Lenksäule (1) nach Anspruch 7, **dadurch gekennzeichnet, dass** das Mitnehmerelement (9) ein Fußteil (97) aufweist, welches zwischen dem Klemmgehäuse (8) und der Stelleinheit (2) angeordnet ist, an dem auf seiner der Stelleinheit (2) zugewandten Seite mindestens ein Haftelement (98) ausgebildet ist.

9. Lenksäule (1) nach einem der vorangehenden Ansprüche, **dadurch gekennzeichnet, dass** das Mitnehmerelement (9) ein Federelement (96) aufweist, welches in Längsrichtung (L) gegen das Klemmgehäuse (8) abstützbar ist.

10. Lenksäule (1) nach einem der vorangehenden Ansprüche, **dadurch gekennzeichnet, dass** das Energieabsorptionselement (71) einen Biegedraht und/oder eine Reißlasche aufweist.

11. Lenksäule (1) nach einem der vorangehenden Ansprüche, **dadurch gekennzeichnet, dass** die Stelleinheit (2) ein inneres Mantelrohr (21) umfasst, welches in Längsrichtung (L) teleskopierbar in der Halteeinheit (3) angeordnet ist, die eine äußere Manteleinheit umfasst.

12. Lenksäule (1) nach einem der vorangehenden Ansprüche, **dadurch gekennzeichnet, dass** die Halteeinheit (3) als Konsoleneinheit zur Befestigung an einer Karosserie eines Kraftfahrzeugs ausgebildet ist, und in der eine Stelleinrichtung (2) in Längsrichtung verstellbar aufnehmbar ist.

## Claims

1. Steering column (1) for a motor vehicle, comprising
an **adjusting unit** (2), in which a steering spindle (22) is mounted so as to be rotatable about the longitudinal axis (25) thereof,
a **holding unit** (3), which can be connected to the body of the motor vehicle and which supports the adjusting unit (2), and
a **clamping device** (5), which, in a fixing position, locks the adjusting unit (2) in a normal mode relative to the holding unit (3) and which, in an unlocked position, enables adjustment of the adjusting unit (2) relative to the holding unit (3), at least in a longitudinal direction (L), wherein the adjusting unit can be moved in the longitudinal direction (L) in the normal mode when
a predefined force is exceeded, wherein at least one **energy absorption element** (71) is provided, which extends into an opening (81) of a **wedging housing** (8), parallel to the longitudinal direction (L), wherein the wedging housing (8) is supported on the holding unit (3) in the longitudinal direction in the normal mode, and the clamping device (5) comprises an **actuating element** (51), which interacts with the wedging housing (8), wherein, in the unlocked position, the energy absorption element (71) can be moved in the longitudinal direction (L) in the through opening (81) of the wedging housing (8) and, in the fixing position, the energy absorption element (71) can be locked in the through opening (81) of the wedging housing (8),
**characterized**
**in that** the opening (81) has a **wedging section** (812) with **inner wall regions** (813, 814) **converging toward one another in a wedge shape in the longitudinal direction (L)**, at least in some section or sections, and at least one **wedging element** (82), which can be moved into the wedging section (812), is arranged between the energy absorption element (71) and the inner wall (813, 814) of the opening (81), wherein the sum of the dimensions of the wedging element (82) and of the energy absorption element (71), when measured between the opposite inner walls (813, 814), is larger than the smallest distance (h) between the converging inner wall regions (813, 814).

2. Steering column (1) according to Claim 1, **characterized in that** the wedging element is designed as a **rolling element** (82), which can be made to roll in the longitudinal direction (L) on the energy absorption element (71) and/or the inner wall (813, 814) of the through opening (81).

3. Steering column (1) according to Claim 2, **characterized in that** the rolling element (82) has a greater hardness than the energy absorption element (71) and/or the wedging housing (8).

4. Steering column (1) according to one of the preceding claims, **characterized in that** the wedging element (82) is mounted in a **driver element** (9).

5. Steering column (1) according to one of the preceding claims, **characterized in that** the actuating element (51) comprises a rotatably mounted clamping axis (51), which is arranged transversely to the longitudinal axis (25) and which can be rotated to actuate the clamping device (5) and has at least one cam element (511, 512, 513), which can be moved toward the wedging housing (8) parallel or perpendicularly to the longitudinal axis (25).

6. Steering column (1) according to Claim 5, **characterized in that** the cam element (511, 512) can be moved toward the wedging housing (8) parallel to the longitudinal axis (25) and pushes together the wedging housing (8) and the driver element (9) in the longitudinal direction (L).

7. Steering column (1) according to Claim 5, **characterized in that** the cam element (513) can be moved toward the wedging housing (8) perpendicularly to the longitudinal axis (25), wherein the wedging housing (8) acts on the driver element (9) and fixes it on the adjusting unit (2).

8. Steering column (1) according to Claim 7, **characterized in that** the driver element (9) has a foot part (97), which is arranged between the wedging housing (8) and the adjusting unit (2) and on which at least one grip-enhancing element (98) is formed on its side facing the adjusting unit (2).

9. Steering column (1) according to one of the preceding claims, **characterized in that** the driver element (9) has a spring element (96), which can be supported in the longitudinal direction (L) against the wedging housing (8).

10. Steering column (1) according to one of the preceding claims, **characterized in** the energy absorption element (71) has a bending wire and/or a tear tab.

11. Steering column (1) according to one of the preceding claims, **characterized in that** the adjusting unit (2) comprises an inner casing tube (21), which is arranged in the holding unit (3) in a manner which allows a telescopic movement in the longitudinal direction (L), said holding unit comprising an outer casing unit.

12. Steering column (1) according to one of the preceding claims, **characterized in that** the holding unit (3) is designed as a bracket unit for fastening on a body of a motor vehicle, and in which an adjusting device (2) can be accommodated in a longitudinally adjustable manner.

## Revendications

1. Colonne de direction (1) pour un véhicule automobile, comprenant:
une unité de montage (2), dans laquelle un axe de direction (22) est monté de façon rotative autour de son axe longitudinal (25),
une unité de maintien (3), qui peut être assemblée à la carrosserie du véhicule automobile et qui supporte l'unité de montage (2), et
un dispositif de serrage (5), qui dans une position de fixation immobilise l'unité de montage (2) en fonctionnement normal par rapport à l'unité de maintien (3) et qui dans une position de libération libère un déplacement de l'unité de montage (2) par rapport à l'unité de maintien (3) au moins dans une direction longitudinale (L),
dans laquelle l'unité de montage en fonctionnement normal est déplaçable dans la direction longitudinale (L) en cas de dépassement d'une force prédéfinie,
dans laquelle il est prévu au moins un élément d'absorption d'énergie (71), qui s'étend parallèlement à la direction longitudinale (L) dans une ouverture (81) vers l'intérieur d'un boîtier de serrage (8), dans laquelle le boîtier de serrage (8) est en fonctionnement normal appuyé en direction longitudinale sur l'unité de maintien (3), et
le dispositif de serrage (5) comprend un élément d'actionnement (51), qui coopère avec le boîtier de serrage (8), dans laquelle en position de libération l'élément d'absorption d'énergie (71) est déplaçable en direction longitudinale (L) dans l'ouverture de passage (81) du boîtier de serrage (8) et en position de fixation l'élément d'absorption d'énergie (71) peut être immobilisé dans l'ouverture de passage (81) du boîtier de serrage (8),
**caractérisée en ce que**
l'ouverture (81) présente une partie de serrage (812) avec des régions de paroi intérieure (813, 814) se rejoignant en forme de coin au moins localement en direction longitudinale (L), et
au moins un corps de serrage (82), qui peut être déplacé dans la partie de serrage (812), est disposé entre l'élément d'absorption d'énergie (71) et la paroi intérieure (813, 814) de l'ouverture (81),
dans laquelle la somme des dimensions du corps de serrage (82) et de l'élément d'absorption d'énergie (71) entre les parois intérieures opposées (813, 814) est plus grande que la plus petite distance (h) entre les régions de paroi intérieure qui se rejoignent (813, 814).

2. Colonne de direction (1) selon la revendication 1, **caractérisée en ce que** le corps de serrage est réalisé sous la forme d'un corps de roulement (82), qui peut rouler dans la direction longitudinale (L) sur l'élément d'absorption d'énergie (71) et/ou sur la paroi intérieure (813, 814) de l'ouverture de passage (81) .

3. Colonne de direction (1) selon la revendication 2, **caractérisée en ce que** le corps de roulement (82) présente une dureté plus élevée que l'élément d'absorption d'énergie (71) et/ou que le boîtier de serrage (8).

4. Colonne de direction (1) selon l'une quelconque des revendications précédentes, **caractérisée en ce que** le corps de serrage (82) est monté dans un élément d'entraînement (9).

5. Colonne de direction (1) selon l'une quelconque des revendications précédentes, **caractérisée en ce que** l'élément d'actionnement (51) comprend un axe de serrage (51) monté de façon rotative et disposé transversalement à l'axe longitudinal (25), qui peut tourner pour actionner le dispositif de serrage (5) et qui présente au moins un élément de came (511, 512, 513), qui est déplaçable parallèlement ou perpendiculairement à l'axe longitudinal (25) contre le boîtier de serrage (8).

6. Colonne de direction (1) selon la revendication 5, **caractérisée en ce que** l'élément de came (511, 512) est déplaçable parallèlement à l'axe longitudinal (25) contre le boîtier de serrage (8) et déplace ensemble l'un contre l'autre en direction longitudinale (L) le boîtier de serrage (8) et l'élément d'entraînement (9).

7. Colonne de direction (1) selon la revendication 5, **caractérisée en ce que** l'élément de came (513) est déplaçable perpendiculairement à l'axe longitudinal (25) contre le boîtier de serrage (8), dans laquelle le boîtier de serrage (8) agit sur l'élément d'entraînement (9) et le fixe à l'unité de montage (2).

8. Colonne de direction (1) selon la revendication 7, **caractérisée en ce que** l'élément d'entraînement (9) présente une partie de pied (97), qui est disposée entre le boîtier de serrage (8) et l'unité de montage (2), sur laquelle au moins un élément d'adhérence (98) est formé sur son côté tourné vers l'unité de montage (2) .

9. Colonne de direction (1) selon l'une quelconque des revendications précédentes, **caractérisée en ce que** l'élément d'entraînement (9) présente un élément de ressort (96), qui peut prendre appui contre le boîtier de serrage (8) en direction longitudinale (L).

10. Colonne de direction (1) selon l'une quelconque des revendications précédentes, **caractérisée en ce que** l'élément d'absorption d'énergie (71) présente un fil flexible et/ou une patte d'arrachage.

11. Colonne de direction (1) selon l'une quelconque des revendications précédentes, **caractérisée en ce que** l'unité de montage (2) comprend un fourreau tubulaire intérieur (21), qui est disposé sous forme télescopique en direction longitudinale (L) dans l'unité de maintien (3), qui comprend un fourreau tubulaire extérieur.

12. Colonne de direction (1) selon l'une quelconque des revendications précédentes, **caractérisée en ce que** l'unité de maintien (3) est réalisée sous la forme d'une unité de console pour la fixation à une carrosserie d'un véhicule automobile, et dans laquelle un dispositif de montage (2) peut être installé de façon déplaçable en direction longitudinale.
